# EUROPEAN PATENT APPLICATION

(11) **EP 2 586 297 A1**
(43) Date of publication of application: **01.05.2013**
(21) Application number: 12189623.7
(22) Date of filing: 23.10.2012
(51) Int. Cl.: A01K 15/02, A01K 27/00, A01K 1/02

(54) **Walk training harness for animal**

(30) Priority: 31.10.2011 JP 2011238764
(71) Applicant: Sakai Medical Co., Ltd., Tokyo (JP)
(72) Inventor: Ito, Hidetoshi, Tokyo (JP); Arakawa, Koji, Tokyo (JP)
(74) Representative: Beetz & Partner

(57) **Abstract**

A walk training harness for animal (1) includes a main body (3) which enfolds an abdominal region of an animal and has a pair of edges extending on a back side when enfolding the abdominal region, a fixing member (10) for connecting the pair of edges in a detachable manner, and hanger fixtures (9a-9c) disposed to the main body (3). A pair of front holes (5) for inserting forelegs is formed on a front side of the main body (3), and a pair of rear holes (6) is formed on a rear side of the main body (3) so as to extend in the backbone direction of the animal longer than the front hole 5.

## Description

### BACKGROUND OF THE INVENTION

### Field of the Invention

The present invention relates to a walk training harness for animal, which is attached to a dog, a cat or other animals that cannot walk because of a disease, an injury, or the like, for performing stand training or walk training as rehabilitation or the like.

### Description of Related Art

Recent years, a lifetime of a pet animal such as a dog or a cat has been increased due to advanced medicine or improvement of diet and breeding environment. Along with this, dogs and the like that cannot stand or walk because of various diseases such as hernia, which have been rarely seen, have been increased. In addition, dogs and the like that cannot walk because of a traffic accident have been also increased. Therefore, in order to perform rehabilitation for such an animal suffered from a disease or an injury, there are conventionally developed a walk training machine for animal.

For instance, JP-A-2004-81072 describes an exercise aid device for animal, which is aimed to prevent a dog or other four leg animal from being fat or to perform rehabilitation after fracture of a leg, and is used for the animal to walk in water or to swim. If the target animal is a dog, for example, a jacket having foreleg holes for enfolding the dog body before and after the forelegs is attached to the dog in a substantially U-shaped manner. Both end portions of the jacket are connected to each other via belts so that the jacket is fixed to the dog. In addition, rings are formed on both sides of the upper portion of the jacket, and hooks of wires are engaged with the rings. The other end of the wire is fixed to a side wall of a bathtub via a suction cup. In this state, the dog can walk or swim in a restricted manner in the bathtub.

In addition, JP-A-2003-9704 describes a walk aid device for pet, which includes a four-leg travel cart having a support rod suspended between forelegs and hind legs. Further, the dog as a pet wears a suspension support member enfolding the dog body to the back with forelegs and hind legs exposed through holes. The suspension support member includes a U-shaped belt-like cord, and a hook disposed at an upper end of the belt-like cord is engaged with an engaging rail of the support rod. Further, the travel cart moves along with walking of the dog, and hence the walk aid can be performed.

However, the jacket disclosed in JP-A-2004-81072 only holds the forelegs inserted in the holes but cannot aid the hind legs. This structure has no problem if it is simply used for exercise aid to prevent obesity. However, but it has the following drawbacks when trying to use it for a dog suffering from a disease such as hernia or an injury. Because the hind legs are not supported, the weight of the dog cannot be reduced, and hence a load in the walk training becomes large. In addition, because only the forelegs are supported, the hind legs and the backbone can move freely in the walking or the like. As a result, balance is bad, and the disease or the injury may become worse. Therefore, it cannot be used for rehabilitation.

In addition, the walk aid suspension support member described in JP-A-2003-9704 has the following drawbacks. The holes for forelegs and hind legs are substantially the same degree and are both tight at the base of the legs. Therefore, an excessive load is applied particularly to the hind legs in walking or the like, and hence the walking exercise is hindered. In addition, the suspension support member enfolds the dog body and is fixed only by a surface fastener. Therefore, if the dog has a disease such as hernia, the backbone may move in walking so that the disease may become worse, and hence it cannot be used for rehabilitation. Further, because the forelegs and the hind legs are tight in the holes, it is necessary to prepare suspension support members having different sizes corresponding to a small dog, a middle size dog, and a large dog, which increases cost.

### SUMMARY OF THE INVENTION

The present invention is made in view of the above-mentioned situation, and it is an object thereof to provide a walk training harness for animal, which protects a part affected by a disease or an injury without disturbing walking exercise for performing rehabilitation.

The walk training harness for animal according to the present invention includes a main body which enfolds an abdominal region of an animal and has a pair of edges extending on a back side when enfolding the abdominal region, a fixing member for connecting the pair of edges in a detachable manner, and hanger fixtures disposed to the main body. A pair of front holes for inserting forelegs is formed on a front side of the main body, and a pair of rear holes for inserting hind legs is formed on a rear side of the main body so as to extend in the backbone direction of the animal longer than the front hole. Note that the backbone direction is the longer direction of the backbone of the animal.

According to the present invention, when a body of the animal is suspended by the harness using a walk training machine so as to perform walk training, the entire body can be held and suspended by the hanger fixture by inserting the forelegs and the hind legs in the front holes and the rear holes of the main body. In addition, in the present invention, because the rear hole is formed longer than the front hole, the hind leg including the thigh can be inserted, and a gap can be formed. Therefore, the harness of the present invention has high flexibility in the walking by the hind legs and can be easily used for various animals having different sizes.

In addition, it is preferred that a pair of metal bars should be disposed in the main body so as to be positioned near the backbone on the back of the animal or on the backbone when the harness is attached to the animal.

The walk training harness according to the present invention suppresses movement of the backbone by the pair of metal bars disposed in the main body along the backbone of the animal. Therefore, the harness is effective for rehabilitation of a disease such as hernia or an injury.

In addition, it is preferred that the hanger fixtures are disposed in the main body so as to be positioned at a plurality of positions in the backbone direction of the animal when the main body is attached to the animal.

According to the present invention, it is possible to prevent a situation in which a load is concentrated on a part of the animal supported by the harness.

In addition, it is preferred that the fixing member includes a surface fastener.

According to the present invention, a joining position can be adjusted in accordance with a difference of size of the animal.

According to the walk training harness of the present invention, when suspending the body of the dog wearing the harness by the hanger fixtures of the harness using walk training machine as body-weight-support, the entire body can be supported in balance by inserting the forelegs and the hind legs in the front holes and the rear holes of the main body, respectively. Thus, it is possible to perform the walk training and the stand training with the reduced weight of the animal. In addition, because the rear hole is longer than the front hole so as to have a larger gap, the hind leg including the thigh can be easily inserted, and a gap can be formed. Therefore, according to the walk training harness of the present invention, there is high flexibility in walking by the hind legs, and it is possible to attach the same to various animals having different sizes for performing the walk training and the stand training. Further, according to the walk training harness of the present invention, it is possible to prevent the load from being concentrated on a part of the animal supported by the harness.

### BRIEF DESCRIPTION OF THE DRAWINGS

Fig. 1 is a diagram illustrating an inner surface of an extended harness according to an embodiment of the present invention.
Fig. 2 is a diagram illustrating a state where the harness illustrated in Fig. 1 is attached to a dog.
Fig. 3 is a perspective view illustrating a body-weight-supported walk training machine for animal which suspends the harness according to the embodiment.
Fig. 4 is a diagram illustrating a structure of a main part of a body weight support level adjustment means including an up and down mechanism of a wire suspending a support bar.
Fig. 5 is a diagram illustrating the up and down mechanism including a moving pulley disposed in a column of the gate-shaped frame.
Fig. 6 is a diagram viewed from a direction perpendicular to Fig. 5, illustrating the up and down mechanism including the moving pulley.

### DETAILED DESCRIPTION OF THE PREFERRED EMBODIMENTS

Hereinafter, a harness used for a body-weight-supported walk training machine for animal according to an embodiment of the present invention is described with reference to the attached drawings.

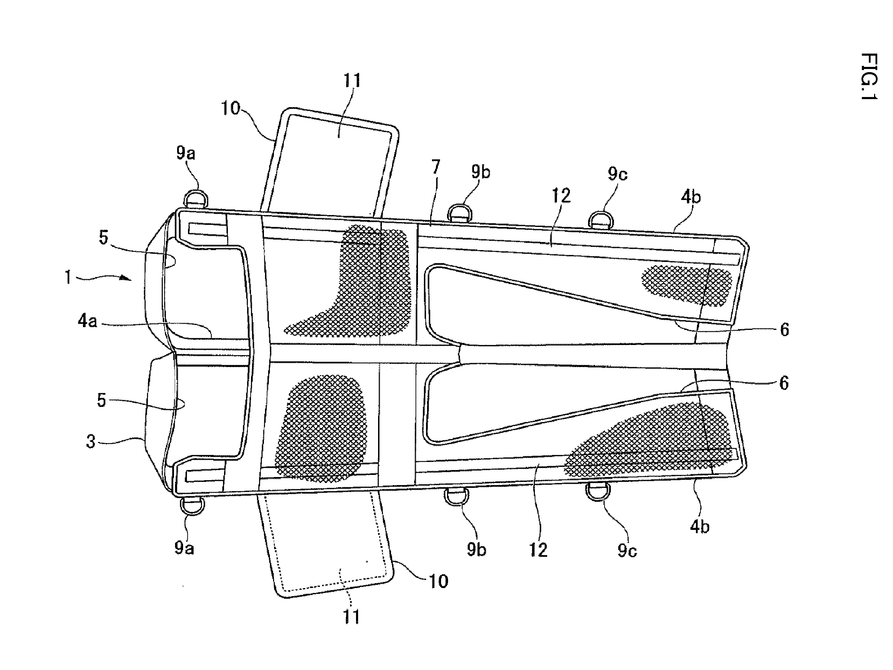

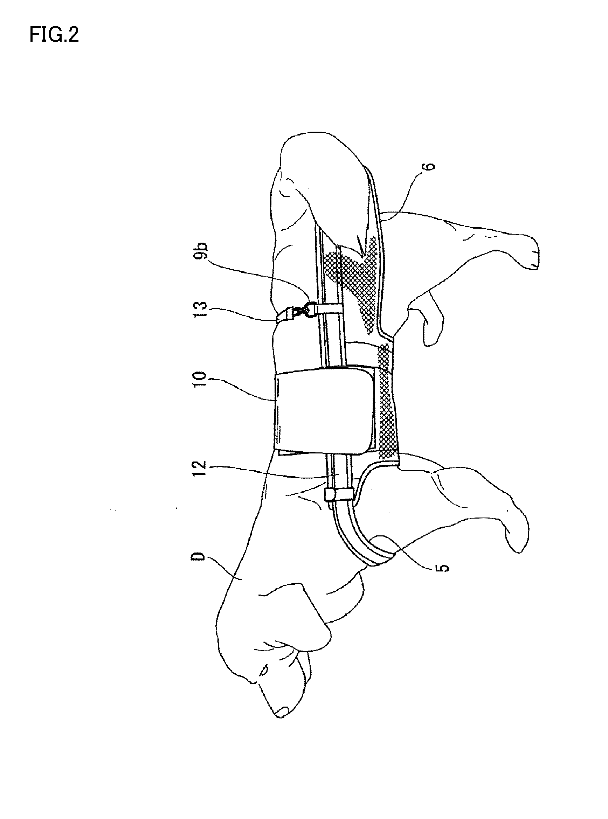

Figs. 1 and 2 illustrate a harness 1 according to an embodiment of the present invention. As described later, this harness 1 is used in a state where a dog wearing the harness 1 is suspended by a walk training machine for animal 2 so as to perform walk training of the dog.

The harness 1 illustrated in Fig. 1 includes a substantially corset type main body 3 made of a mesh-like synthetic resin fabric. In this harness 1, the mesh-like fabric to be the main body 3 is formed in a substantially rectangular shape, for example. A middle belt member 4a made of thick fabric attached to the middle part in the lateral direction, and an end belt member 4b made of thick fabric attached along the contour of four sides of the main body 3 are overlaid and integrated with the main body 3 so as to reinforce the fabric. The middle belt member 4a is extended in the longitudinal direction. Note that it is possible to form the entire main body 3 of thick fabric, and this point is arbitrary. In addition, in a state where the harness 1 is attached to a dog D, a side corresponding to a dog neck is referred to as a front or a front side, while a side corresponding to a dog tail is referred to as a rear or a rear side.

Further, in the front side of the harness 1, there are formed front holes 5 for inserting the forelegs on both sides of the middle belt member 4a. In the rear side of the harness 1, there are rear holes 6 for inserting the hind legs on both sides of the middle belt member 4a. A part between a pair of front holes 5 and a pair of rear holes 6 is a main body support surface 7 for enfolding the abdominal region of the dog D between the forelegs and the hind legs to suspend and support the same.

In addition, the pair of rear holes 6 is formed longer than the front holes 5 along the longitudinal length of the middle belt member 4a disposed between them. For instance, the length of the rear hole 6 is 3 to 4 times or more longer than that of the front hole 5. The hind leg of the dog D has a larger thigh than the foreleg, and so the rear hole 6 should be formed longer. Further, in order to facilitate walking, the rear hole 6 should be formed sufficiently longer so that a gap is formed between the rear hole 6 and the hind leg. Further, because both the pair of front holes 5 and the pair of rear holes 6 are only divided by the middle belt member 4a, by forming the space of the rear hole 6 to be large, it is possible to prevent the penis or the like at the crotch from being pressed.

In addition, as to the dog D to which the harness 1 is attached in a rehabilitation center or the like, a type and a size of the dog are different in every remedy and rehabilitation. In order to support such differences, it is preferred to form the rear hole 6 long. As to the front hole 5 too, it is preferred that a space should be formed so that a gap is formed for easy walking when the foreleg is inserted in the hole.

Note that even if a margin of the size is secured in the front hole 5 and in the rear hole 6, because a size of the dog D is largely different according to a type of the dog D, it is more preferred to prepare a plurality of types of the harness 1 having different sizes such as a small size, a middle size, and a large size.

In addition, on both edges of the harness 1 on long sides, there are a plurality of (three in the diagram) hanger fixtures 9a, 9b, and 9c at positions outside the main body support surface 7 along the longitudinal direction. The hanger fixtures 9a, 9b, and 9c can be engaged with hooks of connection belts of a body-weight-supported walk training machine for animal 2. In the example illustrated in the diagram, the front hanger fixtures 9a are formed at sides of the front holes 5, and the rear hanger fixtures 9c are formed in the middle or vicinity in the longitudinal direction of the rear holes 6. The intermediate hanger fixtures 9b are formed in the vicinity of the main body support surface 7.

Therefore, by suspending two sets of the hanger fixtures 9a and 9c, it is possible to suspend the dog D at the parts near the forelegs and the hind legs so that it is possible to prevent an excessive load from being imposed on a part of the dog D.

On both sides of the main body support surface 7, there are formed wide fixing belts 10 as fixing members. For instance, surface fasteners 11 are disposed on a front surface of one of the fixing belts 10 and on a back side of the other fixing belt 10. Using the surface fasteners 11, the joining position can be adjusted in accordance with a difference of size of the dog D.

In the main body 3 of the harness 1, a plate-like metal bar 12, for example, is fixed to the inside of the fabric at a vicinity of each edge on the long sides. The metal bar 12 extends from a rear end of the main body 3 to a vicinity of a front end of the main body support surface 7. When the harness 1 is attached to the dog D, the both ends in the lateral direction can be positioned at a vicinity of the backbone on the back side or on the backbone. Because the metal bar 12 presses the backbone lightly, the backbone can be protected even if the dog is suffered from a disease such as hernia.

Fig. 2 illustrates a state where the harness 1 is attached to the dog D, in which the forelegs are inserted in the front holes 5 of the harness 1, while the hind legs are inserted in the rear holes 6. In this case too, there is a gap remained between the rear hole 6 and the hind leg. Further, the abdominal region of the dog D is covered and enfolded by the main body support surface 7 of the harness 1, and then the pair of fixing belts 10 are overlapped with each other so that the surface fasteners 11 are joined with each other. Further, using joining belts 13, the pair of hanger fixtures 9b disposed at the middle part of the main body 3 in the longitudinal direction can be joined to each other.

In this state, the dog D is held by the harness 1 to be a state where the body-weight-supported walk training machine for animal 2 can support the weight of the dog body. By changing the joining position of the fixing belt 10 and by changing the joining belt 13, it is possible to adjust a difference of size of the dog D.

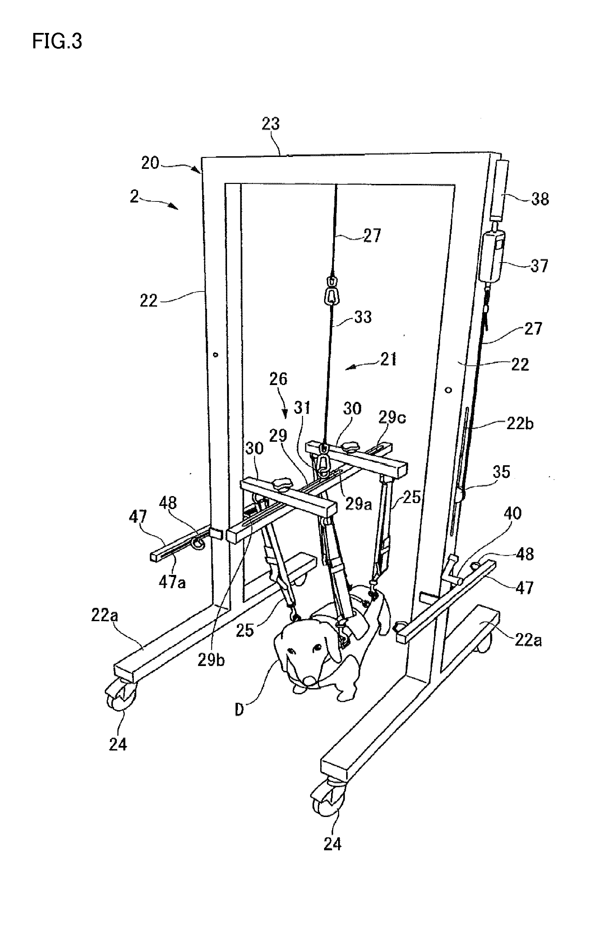

The harness 1 according to this embodiment has the structure described above. Next, with reference to Figs. 3 to 6, there is given a description of the body-weight-supported walk training machine for animal 2, which suspends the dog D wearing the harness 1 to partially support the body weight of the dog D, so that walk training of the dog D can be performed.

The body-weight-supported walk training machine for animal 2 illustrated in Fig. 3 includes a gate-shaped frame 20 and an animal holding fixture 21 for suspending the dog D, for example, so as to perform walk training.

The gate-shaped frame 20 includes two columns 22, 22 and a beam portion 23 connecting upper ends thereof. On a lower end of each of the columns 22, there is formed a substantially rod-like base portion 22a extending in a front and rear direction. Further, wheels 24 are attached to a lower side of the base portion 22a. The animal holding fixture 21 includes the above-mentioned harness 1 for enfolding the body of the animal such as the dog D according to this embodiment, a support bar 26 connected to a plurality of connection belts 25, and a wire 27. Note that the animal held by the harness 1 is not limited to the dog, but may be a cat, a rabbit, or the like. A size of the animal may be an arbitrary size including a large size, a middle size, and a small size.

The hanger fixtures 9a and 9c of the harness 1 are respectively engaged with hooks of the connection belts 25 hanging from the support bar 26.

The support bar 26 includes a main guide member 29 extending in a direction substantially perpendicular to the beam portion 23 and two sub guide members 30 perpendicular to the main guide member 29. Three guide grooves 29a, 29b, and 29c are formed on the upper face of the main guide member 29. An engaging member 31 for connecting to the wire 27 is attached to the middle guide groove 29a, in a slidable manner. The sub guide members 30 are attached to the guide grooves 29b and 29c on both sides in a slidable manner.

In addition, a guide groove (not shown) is formed in a lower face of the sub guide member 30. Further, upper end rings of the connection belts 25 disposed on both sides of the main guide member 29 are respectively connected to the guide grooves in a slidable manner.

Therefore, the two sub guide members 30 are slidable along the guide grooves 29b and 29c with respect to the main guide member 29. In addition, the two connection belts 25 disposed to the individual sub guide members 30 are respectively slidable along the guide grooves of the sub guide members 30 on both sides of the main guide member 29. Because the connection belts 25 connected to the hanger fixtures 9a and 9c of the harness 1 are slidable along the guide grooves, the dog D held by the harness 1 can walk with high flexibility, and can walk without stress from the connection belt 25.

An intermediate wire 33 is connected to a lower part of the wire 27 in a detachable manner. This intermediate wire 33 is included in the wire 27. The engaging member 31 of the support bar 26 is engaged with the intermediate wire 33 disposed to the lower end of the wire 27 in a detachable manner. When the intermediate wire 33 is removed so that the end hook of the wire 27 is directly connected to the engaging member 31 of the support bar 26, the dog D attached to the support bar 26 and the harness 1 can be suspended at the upper part of the column 22.

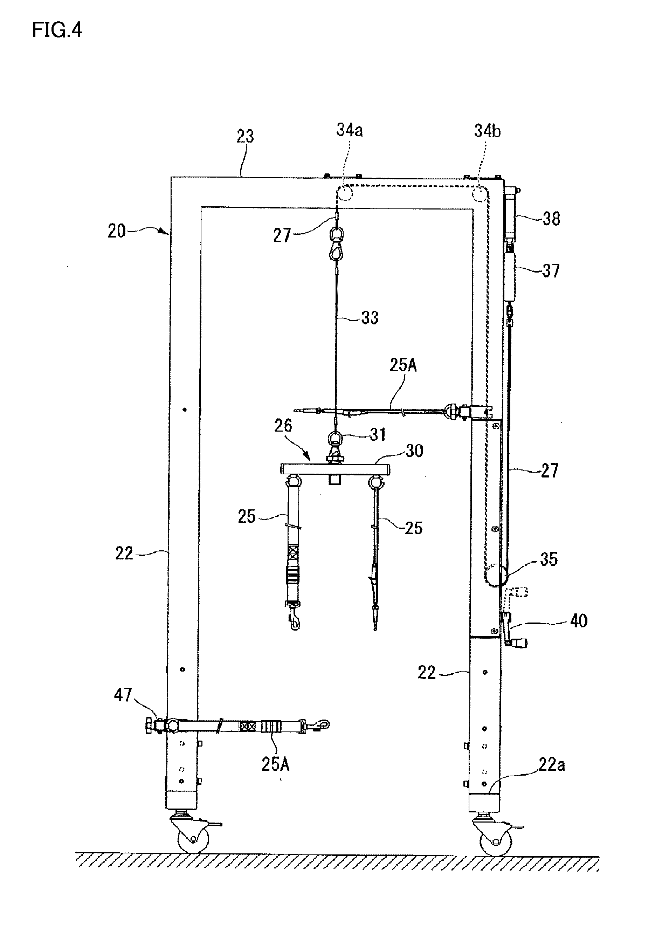

In addition, in Fig. 4, the wire 27 connected to the intermediate wire 33 extends upward and wound around a roller 34a in the beam portion 23 of the gate-shaped frame 20, and extends downward in one of the columns 22 via a roller 34b in the column 4. Further, the wire 27 is wound around a moving pulley 35 supported in an up and down groove 22b (see Fig. 3) formed in the middle of the column 22 in the height direction in a manner movable up and down, so as to extend upward outside the column 22. Further, the wire 27 is connected to a shock absorber 38 via a body weight support level adjusting weigher 37 attached to the vicinity of the upper end of the column 22.

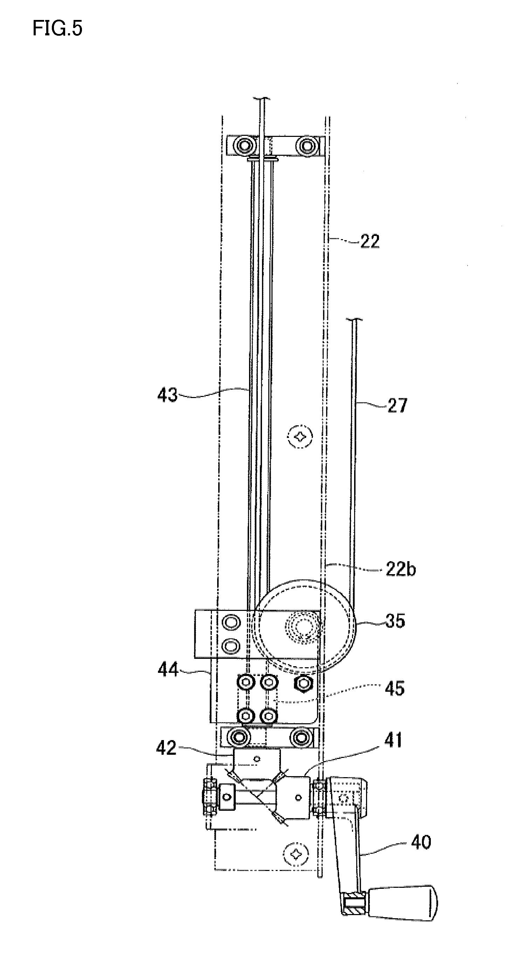

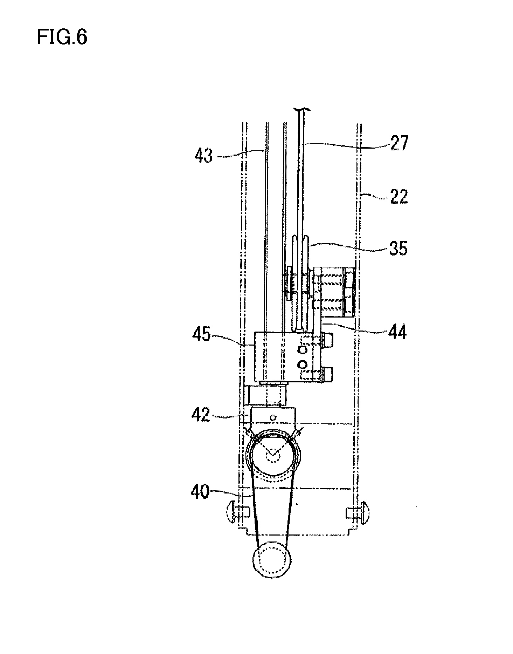

In addition, Figs. 5 and 6 illustrate an internal structure of the column 22 in which the wire 27 is disposed. In Figs. 5 and 6, an operation handle 40 for partially supporting the body weight of the dog D is attached to the lower side of the up and down groove 22b in the column 22. A first bevel gear 41 is connected to a horizontal shaft of the operation handle 40, and teeth of a second bevel gear 42 are engaged with teeth of the first bevel gear 41. A threaded shaft 43 is integrally fixed to the second bevel gear 42 and extends in an up and down direction in the column 22. A trapezoidal thread is helically formed on the outer circumferential surface of the threaded shaft 43. When the operation handle 40 is rotated in forward or backward direction, the threaded shaft 43 can rotate via the first and second bevel gears 41 and 42.

On the other hand, the moving pulley 35 is supported by a bracket 44 in a rotatable manner. On an end portion of the bracket 44, there is fixed a rack member 45 having teeth (not shown) engaging with the trapezoidal thread of the threaded shaft 43. Therefore, when the operation handle 40 is operated so that the threaded shaft 43 is rotated, the bracket 44 including the rack member 45 engaging with the trapezoidal thread moves up and down. Thus, the moving pulley 35 moves together with the bracket 44 in the up and down groove 22b of the column 22.

Further, when the moving pulley 35 moves upward, the wire 27 and the support bar 26 connected to the same are moved downward. When the moving pulley 35 moves downward, the wire 27 and the support bar 26 connected to the same are moved upward. Therefore, when the support bar 26 moves up and down, a weight reduction amount of the dog D held by the harness 1, namely a body weight support level can be adjusted to increase or decrease. This body weight support level can be measured by the body weight support level adjusting weigher 37. When the body weight support level is adjusted, even if a large load is given to the wire 27, the shock absorber 38 can reduce an impact.

In addition, in Fig. 3, a lateral movement correction bar 47 is fixed to each of the columns 22 of the gate-shaped frame 20 with screw or the like at a certain position in the height direction. A guide groove 47a is formed in the inner face of the lateral movement correction bar 47. An attachment fixture 48 for attaching another connection belt 25A (see Fig. 4) is disposed in the guide groove 47a in a slidable manner. The attachment fixture 48 and the hanger fixture 9a or 9c of the harness 1 (or another hanger fixture) can be connected by another connection belt 25A in a detachable manner.

Therefore, the four connection belts 25 attached to the support bar 26 are connected to the hanger fixtures 9a and 9c of the harness 1 from above, and different connection belts 25A attached to the lateral movement correction bars 47 on both sides are connected to the hanger fixtures 9a and 9c of the harness 1. Thus, it is possible to prevent the dog D from wandering in directions crossing the gate-shaped frame 20 or twisting the body and to correct the same to walk straight.

Note that the lateral movement correction bar 47 can be attached to a different position of the column 22 in the height direction in accordance with a position of the dog D. It is preferred to fix the lateral movement correction bar 47 on the inner surface of the column 22 if it is fixed at a high position of the column 22 in order to avoid interference between the same and the wire 27.

Note that the lateral movement correction bar 47 is not always necessary for the walk training.

The body-weight-supported walk training machine for animal 2 including the harness 1 according to this embodiment has the structure described above, and actions thereof are as follows.

First, as illustrated in Fig. 2, the harness 1 selected in accordance with a size of the dog D enfolds the abdominal region, and the forelegs and the hind legs are inserted in the front holes 5 and the rear holes 6, respectively. Then, the fixing belts 10 are overlapped with each other and are joined by the surface fasteners 11. Further, the hanger fixtures 9b disposed on both edges of the main body 3 are joined by the joining belt 13. Thus, the harness 1 is attached to the dog D.

Note that if the dog D is a large dog, the back of the dog D is exposed from the upper edges of the harness 1, and the metal bar 12 are disposed on both sides of the backbone to press the back as illustrated in Fig. 2. In addition, if the dog D is relatively small dog, the back of the dog D is covered with the main body 3 of the harness 1, and a pair of metal bars 12 contacts intimately with the backbone or vicinity so as to press the backbone. In each case, the metal bars 12 press the backbone or the back so as to suppress a large movement of the backbone when the dog D walks, and hence the backbone can be protected.

Next, as illustrated in Fig. 3, the lower end of the wire 27 is attached via the intermediate wire 33 and the hook to the engaging member 31 of the support bar 26. Then, total four connection belts 25 extending from two sub guide members 30 of the support bar 26 are connected to the hanger fixtures 9a and 9c of the harness 1 holding the dog D. In this state, by rotating the operation handle 40, the bracket 44 and the moving pulley 35 are moved up and down as a unit. Note that when the operation handle 40 is rotated, the threaded shaft 43 in one of the columns 4 is rotated via the first and second bevel gears 41 and 42. Then, the rack member 45 engaging with the trapezoidal thread of the threaded shaft 43 is moved up and down so that the bracket 44 and the moving pulley 35 are moved up and down as a unit.

When the moving pulley 35 is moved up and down, the wire 27 supporting the weight of the dog D moves up and down so that a load applied to the wire 27 is adjusted to increase or decrease. Thus, the body weight support level corresponding to a weight supported by the wire 27 is set. This body weight support level is measured by the body weight support level adjusting weigher 37, and the impact can be reduced by the shock absorber 38 even if the load changes.

Therefore, it is possible to perform walk training of the dog D in a state where the weight of the dog D is reduced by the body weight support level by the support of the wire 27. Along with walking of the dog D, the gate-shaped frame 20 is moved in the same direction, and hence the dog D can walk with a guide of the two columns 22 of the gate-shaped frame 20 in a state where the weight thereof is reduced even if it suffers from a disease such as hernia.

In addition, when the dog D walks, it may wander or may be not able to walk upright. In this case, it is preferred to attach the lateral movement correction bars 47 to both the columns 22 of the gate-shaped frame 20, and to connect the additional connection belt 25A attached to the lateral movement correction bar 47 to the hanger fixtures 9a and 9c of the harness 1. Thus, if the dog D tries to wander or to twist the body, the dog D is pulled by the additional connection belts 25A from the left and the right. Therefore, it is possible to let the dog D walk upright.

Note that if the small dog D is replaced with a middle size dog or a large dog for performing the walking training, it is preferred to exchange the harness 1 attached to the dog D in accordance with a size of the dog D. Further, for example, it is preferred to remove the intermediate wire 33 included in the wire 27 so that the hook of the wire 27 is directly connected to the engaging member 31 of the support bar 26. In this way, or further by moving up and down the wire 27 using the operation handle 40, it is possible to hold a middle size dog or a large dog in a body-weight-supported state so as to perform the walk training. In this way, compared with the case where a suspension position of the wire 27 is adjusted only by operating the operation handle 40, an adjustment amount can be reduced, and the adjustment is facilitated.

In this way, if the dog D is a small dog, a middle size dog, or even a large dog, a suspension height of the wire 27 can be easily adjusted so as to perform the walking training.

As described above, according to the walk training harness 1 of this embodiment, when suspending the body of the dog D wearing the harness 1 by the hanger fixtures 9a and 9c of the harness 1 using the walk training machine for animal 2, it is possible to hold the entire body of the dog D in balance to stand by inserting the forelegs and the hind legs in the front holes 5 and the rear holes 6 of the main body 3, respectively. In other words, according to the walk training harness 1 of this embodiment, it is possible to reduce the weight of the dog D in the state where the entire body is held in balance, so as to perform the walk training or the stand training. Further, because the rear hole 6 is formed 3 to 4 times or more longer than the front hole 5, the hind leg including the thigh can be easily inserted, and in that case there is formed a gap. Therefore, according to the walk training harness 1 of this embodiment, there is high flexibility for walking by the hind legs. In addition, it is possible to use it for various animals having different sizes, for performing the walk training and the stand training. Further, because the hanger fixtures 9a to 9c are disposed along the longitudinal direction of the harness 1, it is possible to prevent the load from being concentrated on a part of the dog D.

In addition, because the main body 3 of the harness 1 includes the pair of metal bars 12 to be disposed on both sides of the backbone in the back of the animal such as a dog D or on the backbone, it is possible that the metal bar 12 presses the backbone lightly in the walking exercise to suppress movement of the backbone. Therefore, the harness 1 is effective for rehabilitation of an animal having a disease such as hernia or an injury. In addition, in this embodiment, the back of the dog D is exposed between both edges of the harness 1, and the fixing belt 10 and the joining belt 13 press the back. In this structure, because the harness 1 suppresses and allows the movement of the backbone in the walking exercise but does not disturb the movement completely, the walking exercise can be performed smoothly.

Note that the harness 1 of the present invention is not limited to the embodiment described above, which can be modified appropriately within the scope of the present invention without deviating from the spirit of the same.

For instance, the surface fasteners 11 are used for joining the fixing belts 10 of the harness 1 in this embodiment, but other fixing means may be used. In addition, if the dog D is a small dog, when the harness 1 is attached to the dog D, the both edges of the main body 3 may be overlapped.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A walk training harness for animal (D) comprising:
a main body (3) which enfolds an abdominal region of an animal and has a pair of edges extending on a back side when enfolding the abdominal region;
a fixing member (10) for connecting the pair of edges in a detachable manner; and
hanger fixtures (9a-9c) disposed to the main body, wherein
a pair of front holes (5) for inserting forelegs are formed on a front side of the main body (3), and
a pair of rear holes (6) for inserting hind legs is formed on a rear side of the main body (3) so as to extend in the backbone direction of the animal (D) longer than the front hole (5).

2. The walk training harness for animal according to claim 1, wherein a pair of metal bars (12) are disposed in the main body (3) so as to be positioned near the backbone on the back of the animal (D) or on the backbone when the harness is attached to the animal (D).

3. The walk training harness for animal according to claim 1 or 2, wherein the hanger fixtures (9a - 9c) are disposed in the main body (3) so as to be positioned at a plurality of positions in the backbone direction of the animal (D) when the main body (3) is attached to the animal (D).

4. The walk training harness for animal according to any one of claims 1 to 3, wherein the fixing member (10) includes a surface fastener (11).
